# EUROPÄISCHE PATENTSCHRIFT

(11) **EP 3 770 566 B1**
(45) Veröffentlichungstag und Bekanntmachung des Hinweises auf die Patenterteilung: **30.11.2022**
(21) Anmeldenummer: 20186496.4
(22) Anmeldetag: 17.07.2020
(51) Int. Cl.: G01G 19/02, B26D 7/32, B26D 7/30

(54) **WIEGEVORRICHTUNG UND VERFAHREN ZUM WIEGEN EINER LEBENSMITTELPORTION AUF AUFLAGEELEMENTEN**
WEIGHING APPARATUS AND METHOD FOR WEIGHING A FOOD PORTION ON SUPPORT MEMBERS
DISPOSITIF DE PESAGE ET PROCÉDÉ DE PESAGE D'UNE PORTION D'ALIMENT SUR DES ÉLÉMENTS D'APPUI

(30) Priorität: 24.07.2019 DE 102019210959
(43) Veröffentlichungstag der Anmeldung: 27.01.2021
(73) Patentinhaber: Weber Maschinenbau GmbH Breidenbach, 35236 Breidenbach (DE)
(72) Erfinder: LEHMANN, Stefan, 17034 Neubrandenburg (DE)
(74) Vertreter: Grünecker Patent- und Rechtsanwälte PartG mbB

(56) Entgegenhaltungen:
- DE-A1-102015 111 942
- FR-A1- 2 310 553

## Beschreibung

Die vorliegende Erfindung betrifft eine Wiegevorrichtung, ein die Wiegevorrichtung umfassendes Lebensmittelverarbeitungssystem, sowie ein Verfahren zum Wiegen einer Lebensmittelportion.

Lebensmittelverarbeitungssysteme zum Aufschneiden und Portionieren von Fleisch-, Wurst-, oder Käseprodukten umfassen üblicherweise eine Lebensmittelaufschneidevorrichtung zum Aufschneiden eines Produktlaibs zu einer Lebensmittelportion, sowie ein oder mehrere Fördermittel zum Transport der geschnittenen Lebensmittelportionen zu weiteren Verarbeitungsbereichen, wie beispielsweise einer Verpackungsstation. Zum Transport der Lebensmittelportionen kommen eine Vielzahl von Arten von Fördermitteln zum Einsatz, wobei zumeist Endlosförderer in Form von Förderriemen oder Förderbändern eingesetzt werden.

Förderbänder bieten eine stabile Auflagefläche für Produkte, sind aber wenig flexibel. So wird in der DE 10 2015 111 942 A1 offenbart, dass linienförmige Materialschwächungen bzw. Aussparungen in einem Förderband vorgesehen sein können, um dieses flexibler zu machen. Damit soll das Förderband verschränkt werden können, um Produkte quer zu verteilen.

Die WO 03/042642 A1 beschreibt einen Wiegeförderer mit einer Vielzahl von parallel angeordneten Förderriemen und einen Variationsförderer, der ebenfalls eine Vielzahl von parallel angeordneten Förderriemen aufweist, die zwischen den Förderriemen des Wiegeförderers angeordnet sind. Durch Verschieben des Variationsförderers in Längs- und/oder Hochrichtung kann die für das zu wiegende Produkt zur Verfügung stehende Auflagefläche des Wiegeförderers verändert werden, so dass in Abhängigkeit der Produktgröße immer nur ein Produkt auf der Wiegefläche aufliegt. Aus der FR 2 310 553 A1 ist eine Vorrichtung zum Fördern und Wiegen von Paketen bekannt, bei welcher durch Absenken des Förderbands Auflageelemente einer Waage Ausnehmungen im Förderband durchgreifen, so dass ein Paket auf diesen aufliegt und gewogen wird.

Weiterhin sind biegeschlaffe Förderbänder bekannt, so dass das Gewicht der auf den Bändern aufliegenden Produkte erfasst werden kann, indem das Förderband auf eine Waage durchhängt.

Aufgabe der Erfindung ist es, eine Vorrichtung und ein Verfahren zum präzisen Wiegen von Lebensmittelportionen bereitzustellen, wobei die Lebensmittelportionen zudem stabil, präzise und sicher auf einem Förderband transportiert werden können.

Die Aufgabe wird erfindungsgemäß gelöst durch eine Wiegevorrichtung gemäß Anspruch 1, ein Lebensmittelverarbeitungssystem gemäß Anspruch 9, sowie ein Verfahren zum Wiegen einer Lebensmittelportion gemäß Anspruch 10. Vorteilhafte Weiterbildungen der Erfindung sind in den Unteransprüchen angegeben.

Eine erfindungsgemäße Wiegevorrichtung zum Wiegen einer Lebensmittelportion umfasst eine Waage, ein Förderband, das sich wenigstens bereichsweise über der Waage erstreckt, wobei das Förderband mit Durchbrechungen versehen ist, und die Waage Auflageelemente umfasst. Das Förderband und die Auflageelemente sind relativ zueinander bewegbar, sodass die Auflageelemente wenigstens einen Teil der Durchbrechungen durchgreifen. Zweckmäßig umfasst die Waage des Weiteren eine Wägezelle, welche beispielsweise mittels Dehnungsmessstreifen oder Piezoelement eine Gewichtskraft ermittelt. Liegt die Lebensmittelportion zunächst vollständig auf dem Förderband auf, so wird die Lebensmittelportion beim Durchgreifen der Durchbrechungen von den Auflageelementen angehoben, um nunmehr mit ihrem gesamten Gewicht auf den Auflageelementen aufzuliegen. So kann das Gewicht der Lebensmittelportion mittels der Waage bestimmt werden. Die relative Bewegung von Förderband und Auflageelementen zueinander findet bevorzugt in vertikaler Richtung statt und kann entweder durch ein Anheben der Waage inklusive Wägezelle oder nur der Auflageelemente relativ zur Wägezelle oder durch ein Absenken des Förderbands oder durch Kombinationen von vorgenannten geschehen. Das Anheben und Absenken kann zweckmäßig durch Stellglieder erfolgen, welche insbesondere Linearstellglieder, beispielsweise hydraulische oder pneumatische Hubzylinder, sein können. Genauso können elektromotorisch, insbesondere servomotorisch, betätigte Stellglieder oder auch Magnettechnik, insbesondere Linearmotoreinheiten, zum Einsatz kommen. So kann das Förderband stabil und straff gespannt sein, um die Lebensmittelportion exakt zu bewegen. Dennoch kann das Gewicht der Lebensmittelportion exakt bestimmt werden, da zum Zeitpunkt des Wiegens die Lebensmittelportion auf den Auflageelementen, jedoch nicht mehr auf dem Förderband aufliegt. Materialbeeinträchtigungen an Förderband und Waage sowie eine Verfälschung des Messergebnisses wegen eines Kontakts des Förderbands mit der Waage, wenn das Förderband, wie oben erwähnt, biegeschlaff durchhängt, um auf der Waage aufzuliegen, werden damit ausgeschlossen. Durch die erfindungsgemäße Kombination von Waage und Förderband entfallen Bandübergänge, wie sie bei separaten Wägetischen mit eigenem Fördermittel vorhanden sind. Ebenso entfällt die dafür nötige zusätzliche Antriebstechnik. Das Förderband kann ein Universalband sein, welches sich durchgehend von einem Portionier- bzw. Aufschneidebereich bis zu einer Abgabe an eine Verpackungsmaschine oder einen Abgabebereich zur Hand-Abnahme von Lebensmittelportionen erstreckt. Der Antrieb des Förderbands erfolgt beispielsweise über Perforierungen in den Randbereichen des Förderbands. In die Perforierungen greifen Nocken einer Antriebsrolle ein, welche wiederum zum Beispiel mittels Servo- oder Schrittmotor angetrieben werden kann. Die Antriebsrolle kann auch als Direktantrieb in Form eines Trommelmotors mit angebrachten Nocken realisiert sein.

Die erhaltenen Messdaten können für direkte und automatische Rückkopplungsmechanismen, beispielsweise eine Anpassung der Scheibendicke beim Aufschneiden, verwendet werden. Somit kann ohne manuelle Überwachung und Eingreifen eines Bedieners die Einhaltung eines Soll-Gewichts jeder Lebensmittelportion sichergestellt werden. Ebenso können die erhaltenen Daten auf einem Display dargestellt werden, sodass ein Bediener Einstellungen manuell vornehmen kann. Zudem ist die beschriebene Erfindung wegen ihres geringen Herstellungsaufwands, insbesondere im Vergleich zur Verwendung von separaten Wägetischen, besonders kostengünstig.

Vorzugsweise sind die Durchbrechungen nur in wenigstens einem ersten Teilbereich des Förderbands vorgesehen. Die Durchbrechungen sind also nur in einem Abschnitt des Förderbands vorhanden, welcher dafür vorgesehen ist über der Waage mit den Auflageelementen positioniert zu werden, um eine Messung durchzuführen. Somit können der oder die restlichen Bereiche, welche nicht über der Waage positioniert werden, beispielsweise einem Abstand eines Aufschneidebereichs zur Position der Waage entsprechen, und ohne Durchbrechungen ausgebildet sein, und damit die Stabilität des Förderbands gewährleisten.

Zweckmäßig sind mehrere erste Teilbereiche mit Durchbrechungen mit zweiten Teilbereichen ohne Durchbrechungen alternierend, insbesondere regelmäßig, über eine Gesamtlänge des Förderbands angeordnet. So kann für jeden Takt der Maschine eine Portion gewogen werden, während eine oder mehrere andere Portionen bereits auf jeweils einen oder mehreren weiteren ersten Teilbereichen aufgeschnitten werden. Dementsprechend können mehrere Arbeitsschritte gleichzeitig erfolgen, und der Durchsatz des Lebensmittelverarbeitungssystems wird erhöht.

In einer vorteilhaften Variante haben die Durchbrechungen eine maximale Länge, die nicht länger als 120% der Erstreckungslänge der Auflageelemente in Förderrichtung des Förderbands ist. Um die Stabilität des Förderbands zu gewährleisten ist es zunächst sinnvoll, die Durchbrechungen in einer Größe, welche im Wesentlichen der der Auflageelemente entspricht, zu wählen. Damit sichergestellt ist, dass die Auflageelemente jedoch ohne Berührung des Förderbands durch die Durchbrechungen durchgreifen können, können die Durchbrechungen etwas größer als die Querschnittsfläche der Auflageelemente in einer horizontalen Schnittebene ausgeformt werden, insbesondere wenigstens 5%, 10%, 15% oder 20% größer, und bevorzugt weniger als 50% größer. So kann auch eine gewisse Ungenauigkeit bei der Position, an welcher das Förderband gestoppt wird, toleriert werden. Des Weiteren ist es somit möglich, das Förderband und/oder die Auflageelemente geringfügig in und/oder gegen die Förderrichtung zu bewegen, ohne dass bei angehobenen Auflageelementen und/oder abgesenktem Förderband, beim Anheben und Absenken der Auflageelemente, bzw. beim Wiegen der Lebensmittelportion eine Berührung von Auflageelementen und Förderband stattfindet. Damit ist es denkbar, in einem Aufschneidebereich eine geschindelte Lebensmittelportion auf das Förderband aufzuschneiden, wobei das Förderband nach jeder Lebensmittelscheibe geringfügig bewegt wird, um den geschindelten Stapel zu formen, und dabei gleichzeitig eine Gewichtsmessung an einer anderen Lebensmittelportion stattfindet. Ebenso ist es denkbar, wenn die Wiegevorrichtung unterhalb einer Lebensmittelaufschneidevorrichtung angeordnet ist, die Lebensmittelscheiben direkt auf die Auflageelemente aufzuschneiden und dabei die Auflageelemente geringfügig zu bewegen um einen geschindelten Stapel herzustellen. Dabei kann gleichzeitig die Gewichtsmessung, insbesondere mit Erfassung des Gewichts der einzelnen Lebensmittelscheiben, vorgenommen werden.

In einer bevorzugten Variante erstrecken sich die Durchbrechungen und die Auflageelemente jeweils linear in Förderrichtung. Dies ermöglicht im Bereich der Durchbrechungen eine hohe Stabilität des Förderbands. Da das Förderband zumeist in Förderrichtung mit einer gewissen Spannung über Umlenkrollen geführt wird, um ein Durchhängen zu vermeiden, kann diese Materialspannung auch durch die zwischen den Durchbrechungen verbleibenden Materialstreifen geführt werden, ohne dass sich diese Materialstreifen und damit die Durchbrechungen verziehen. Die lineare Form in Förderrichtung ist zudem einfach und kostengünstig zu fertigen.

In einer weiteren Variante sind die Auflageelemente und die Durchbrechungen nichtlinear ausgeführt. So kann je nach zu verarbeitendem Produkt eine stabile Auflage bei Wiegen sichergestellt werden, insbesondere so, dass das Produkt nicht zwischen den Auflageelementen hindurchhängt.

Bevorzugt sind die Durchbrechungen in Abständen von unter 15 mm nebeneinander im Förderband angeordnet. Dementsprechend sind auch die Auflageelemente mit verhältnismäßig kleinen Abständen angeordnet, und es wird ein Durchhängen oder Durchrutschen von Lebensmittelscheiben, wenn diese durch die Auflageelemente angehoben werden, verhindert.

In einer weiteren vorteilhaften Variante sind wenigstens 5 Durchbrechungen und höchstens 18 Durchbrechungen nebeneinander im Förderband angeordnet. So bleibt einerseits das Förderband selbst stabil, sodass das Förderband auch beim Aufliegen einer Lebensmittelportion im Bereich der Durchbrechungen eine stabile Unterlage bildet, und andererseits können genügend Auflageelemente für die Waage vorgesehen werden, um die Lebensmittelportion auch stabil anzuheben.

In einer zweckmäßigen Variante erstrecken sich die Durchbrechungen wenigstens 50 mm und höchstens 200 mm in Förderrichtung des Förderbands. Somit können Auflageelemente in passender Größe für die üblicherweise auftretenden Stapelgrößen der Lebensmittelprodukte vorgesehen werden, so dass diese stabil zum Wiegen angehoben werden können.

Vorzugsweise ist die Waage zwischen einem Obertrum und einem Untertrum des Förderbands angeordnet, oder ein erster Teil der Waage ist zwischen einem Obertrum und einem Untertrum des Förderbands angeordnet, und ein zweiter Teil der Waage ist seitlich neben dem Förderband angeordnet. Die erste Variante ist äußerst Platz sparend, wodurch die Wiegevorrichtung als kompakte, austauschbare Einheit innerhalb eines Lebensmittelverarbeitungssystems gestaltet werden kann. Die zweite Variante ermöglicht eine besonders gute Zugänglichkeit zu dem Teil der Waage, welcher beispielsweise häufig gewartet werden soll, oder Bauteile enthält, welche eine Anpassung an unterschiedliche Gewichtsbereiche erlauben.

In einer weiteren vorteilhaften Variante umfasst die Wiegevorrichtung zwei oder mehrere parallele Transportspuren mit jeweils einer Waage, und einem gemeinsamen oder jeweils pro Transportspur separaten Förderband, in welchem Durchbrechungen für jede Transportspur ausgebildet sind. Damit können Lebensmittelportionen von zwei oder mehreren Lebensmittelprodukten nebeneinander aufgeschnitten, transportiert und gewogen werden. Dazu kann ein einziges gemeinsames Förderband verwendet werden, in welchem Durchbrechungen bzw. erste Teilbereiche mit Durchbrechungen nebeneinander angeordnet sind. Ebenso kann jedoch auch pro Transportspur jeweils ein separates Förderband mit Durchbrechungen bzw. ersten Teilbereichen vorgesehen sein, wobei die zwei oder mehreren Förderbänder in diesem Fall mittels eines gemeinsamen Antriebs oder auch mittels jeweils einem eigenen, separat steuerbaren Antrieb betrieben werden können. Ebenso können Förderbänder, welche sich über mehrere Transportspuren erstrecken nebeneinander angeordnet sein, beispielsweise zwei Förderbänder, welche sich jeweils über zwei parallele Transportspuren der Breite nach erstrecken. Wird ein gemeinsames Förderband für zwei oder mehrere Transportspuren verwendet, so können die Durchbrechungen bzw. die ersten Teilbereiche mit Durchbrechungen nebeneinander aber auch versetzt angeordnet sein, entsprechend der jeweiligen Position der Waage der einzelnen Transportspur. Werden separate Förderbänder verwendet, so können diese synchron oder auch zeitlich versetzt gesteuert werden. Somit können mehrere Lebensmittelprodukte parallel verarbeitet werden.

Ein erfindungsgemäßes Lebensmittelverarbeitungssystem, umfasst eine Lebensmittelaufschneidevorrichtung zum Aufschneiden eines Lebensmittelprodukts zu Lebensmittelportionen, und eine Wiegevorrichtung gemäß einer der vorangehend beschriebenen Varianten. Zweckmäßig ist die Lebensmittelaufschneidevorrichtung stromaufwärts einer Waage der Wiegevorrichtung angeordnet. Ebenso ist es jedoch auch möglich, die Lebensmittelaufschneidevorrichtung über der Waage anzuordnen, um Lebensmittelportionen direkt auf diese aufzuschneiden.

Ein erfindungsgemäßes Verfahren zum Wiegen einer Lebensmittelportion umfasst folgende Verfahrensschritte:
i) Relatives Bewegen von Auflageelementen einer Waage und/oder der Waage bezüglich eines Förderbands, sodass die Auflageelemente zugeordnete Durchbrechungen im Förderband durchgreifen, und
ii) Wiegen der auf den Auflageelementen aufliegenden Lebensmittelportion mittels der Waage.

Vorzugsweise werden nur die Auflageelemente und/oder die gesamte Waage beim relativen Bewegen gemäß Schritt i) angehoben. Somit kann das Förderband auf konstantem Höhenniveau verbleiben, wodurch die Übergänge zu anschließenden Förderbändern unverändert bleiben, und die Lebensmittelportionen ohne Beeinträchtigung auf diese abtransportiert werden können.

Zweckmäßig wird das Förderband angehalten, bevor die Auflageelemente das Förderband durchgreifen. So besteht ausreichend Zeit um die Waage bzw. die Auflageelemente nach oben zu fahren.

In einer vorteilhaften Variante werden die Durchbrechungen und Auflageelemente vor Verfahrensschritt i) aufeinander ausgerichtet. So wird sichergestellt, dass die Auflageelemente beim Durchgreifen der Durchbrechungen nicht mit dem Förderband kollidieren. Eine derartige Ausrichtung kann durch Überwachung bzw. Regelung, insbesondere von Servo- oder Schrittmotoren zum Antrieb des Förderbands, gewährleistet werden. Denkbar wäre auch eine optische Bilderfassung der Durchbrechungen. Ebenso können am Förderband Markierungen vorhanden sein, beispielsweise optische oder magnetische Markierungen, deren Position mit geeigneten Sensoren erfasst werden.

In einer bevorzugten Variante wird die Lebensmittelportion nach Schritt i) direkt auf den Auflageelementen abgelegt. Dadurch kann das Gewicht einzelner Scheiben der Lebensmittelportion beim Aufschneiden gemessen werden. So kann noch beim Aufschneiden einer Portion die Scheibendicke angepasst werden, falls die erfassten Messwerte von Soll-Werten abweichen. Zudem verringert sich eine Gesamtverarbeitungszeit der Lebensmittelportion, da ein Zufördern zu der Waage entfällt.

In einer weiteren zweckmäßigen Variante wird die Lebensmittelportion vor und nach dem Wiegen auf dem Förderband gefördert. So kann der Wiegebereich von einem Aufschneidebereich getrennt werden, wobei in Letzterem bereits eine weitere Lebensmittelportion aufgeschnitten werden kann, während die vorangehende Lebensmittelportion gewogen wird.

Bevorzugt werden von dem Lebensmittelprodukt abgeschnittene Lebensmittelscheiben nacheinander auf den Auflageelementen abgelegt, bis die darauf angeordnete Lebensmittelportion ein vorbestimmtes Portionsgewicht erreicht hat. So ist sichergestellt, dass jede Lebensmittelportion das gewünschte Portionsgewicht aufweist, wobei dazu der Aufschneidevorgang korrigiert werden kann, beispielsweise durch Variation der Scheibendicke, falls eine Interpolation der erfassten Scheibengewichte eine Abweichung beim Portionsgewicht erwarten ließe.

Im Folgenden werden Ausführungsbeispiele der Erfindung anhand der Figuren näher beschrieben. Dabei zeigen
Figur 1: eine perspektivische Ansicht einer ersten Ausführungsform einer erfindungsgemäßen Wiegevorrichtung mit einer Lebensmittelportion auf dem Förderband,
Figur 2: eine perspektivische Ansicht einer ersten Ausführungsform einer Wiegevorrichtung mit einer von Auflageelementen einer Waage angehobenen Lebensmittelportion,
Figur 3: eine perspektivische Ansicht einer zweiten Ausführungsform einer Wiegevorrichtung mit einem sich über zwei Transportspuren erstreckenden Förderband,
Figur 4: eine perspektivische Ansicht einer dritten Ausführungsform einer Wiegevorrichtung mit zwei Transportspuren mit jeweils einem separaten Förderband,
Figur 5: eine perspektivische Ansicht einer Waage mit Auflageelementen für die ersten drei Ausführungsformen einer erfindungsgemäßen Wiegevorrichtung,
Figur 6: eine schematische Draufsicht eines Förderbands mit Durchbrechungen für eine vierte Ausführungsform einer erfindungsgemäßen Wiegevorrichtung,
Figur 7: eine schematische Draufsicht eines Förderbands mit Durchbrechungen und einem teilweise seitlich neben dem Förderband angeordneten Teil einer Waage für eine fünfte Ausführungsform einer erfindungsgemäßen Wiegevorrichtung,
Figur 8: eine seitliche schematische Schnittansicht eines Lebensmittelverarbeitungssystems umfassend eine sechste Ausführungsform einer erfindungsgemäßen Wiegevorrichtung.

Einander entsprechende Komponenten sind in den Figuren jeweils mit gleichen Bezugszeichen versehen.

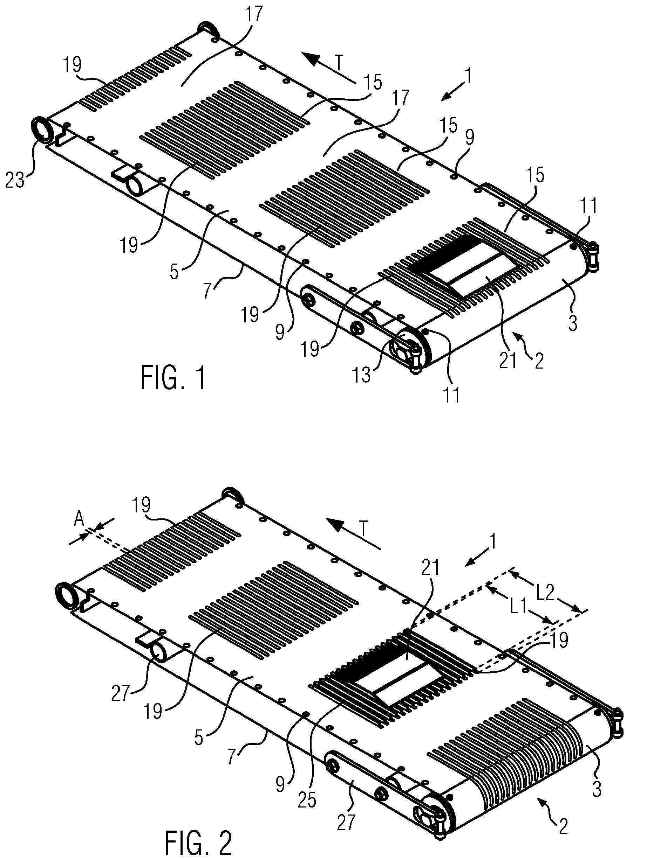

Figur 1 zeigt eine erste Ausführungsform einer erfindungsgemäßen Wiegevorrichtung 1 mit einer einzelnen Transportspur 2 und einem umlaufenden Förderband 3, welches einen oben laufenden Abschnitt, das sogenannte Obertrum 5, und einen unten laufenden Abschnitt, das Untertrum 7, aufweist. Das Förderband 3 weist in dieser Ausführungsform seitliche Perforierungen 9 auf, in welche Nocken 11 einer Antriebsrolle 13 eingreifen, um das Förderband 3 in einer Transportrichtung T, bezogen auf das Obertrum 5, anzutreiben. Das Förderband 3 weist erste Teilbereiche 15 mit Durchbrechungen 19 und davon in Transportrichtung T beabstandete zweite Teilbereiche 17 ohne Durchbrechungen 19 auf. Auf dem Förderband 3 ist eine Lebensmittelportion 21 in Form eines geschindelten Stapels von Lebensmittelscheiben, beispielsweise Wurst oder Käse, abgelegt. In dieser Ausführungsform sind die mehreren ersten Teilbereiche 15 und die mehreren zweiten Teilbereiche 17 alternierend in regelmäßiger Anordnung auf der gesamten Länge des Förderbands 3 ausgebildet. Das Obertrum 5 ist über die Antriebsrolle 13 und eine Umlenkrolle 23 straff gespannt, so dass kein nennenswertes Durchhängen des Obertrums 5 auftritt. Ein Elektromotor zum Antrieb des Förderbands 3 kann direkt in der Antriebsrolle 13 integriert sein, oder auch extern angeordnet und mit der Antriebsrolle 13 verbunden sein.

Figur 2 zeigt eine erste Ausführungsform einer erfindungsgemäßen Wiegevorrichtung 1, wobei das Obertrum 5, und somit die Lebensmittelportion 21, im Vergleich zu Figur 1 weiter entlang der Transportrichtung T bewegt wurde. Das Förderband 3 befindet sich nun in einer Position, in welcher die Durchbrechungen 19 so ausgerichtet sind, dass von unten angehobene Auflageelemente 25 einer Waage die Durchbrechungen 19 berührungsfrei durchgreifen können. Die Auflageelemente 25 sind in einer oberen, angehobenen Position gezeigt, in welcher die Lebensmittelportion 21 vollständig von dem Förderband 3 angehoben ist und nicht mehr auf diesem aufliegt. So kann das Gewicht der Lebensmittelportion 21 mittels der Waage gemessen werden, mit der die Auflageelemente 25 verbunden sind. Die Waage ist in dieser Ausführungsform vollständig zwischen Obertrum 5 und Untertrum 7 verbaut und deshalb in dieser Darstellung nicht sichtbar. Die Waage kann dazu an Rahmenteilen 27 gelagert sein, welche wiederum an einen Maschinenrahmen montiert werden können. Nach der Gewichtsmessung werden die Auflageelemente 25 wieder bis unterhalb des Obertrums 5 abgesenkt, so dass sich das Förderband 3 weiter bewegen kann. Die Auflageelemente 25 sind hier als gerade, längliche Elemente ausgebildet und entsprechen der Form der Durchbrechungen 19 des Förderbands 3, wobei ihre Erstreckungslänge L1 geringfügig kleiner ist, als die Länge L2 der Durchbrechungen 19, so dass diese berührungsfrei durchgreifbar sind. Die Abstände A der Durchbrechungen 19 sind so gewählt, dass einerseits eine ausreichende Anzahl von Auflageelementen 25 möglich ist, und andererseits genug Material des Förderbands 3 vorhanden bleibt, um eine ausreichende Stabilität des Förderbands 3 zu gewährleisten. Die Größe und Anzahl der Auflageelemente 25 richtet sich insbesondere nach der Größe der Lebensmittelportionen 21, welche gewogen werden sollen. Entsprechend kann die Wiegevorrichtung 1 als Ganzes austauschbar in einem Lebensmittelverarbeitungssystem angeordnet sein.

In dem gezeigten Beispiel liegt die Lebensmittelportion 21 vollständig auf den Auflageelementen 25 auf. Da eine Lebensmittelportion 21 zumeist eine gewisse Biegesteifigkeit aufweist, kann die Lebensmittelportion 21 aber auch eine geringfügig größere Grundfläche als die Auflageelemente 25 aufweisen und dennoch vollständig vom Förderband 3 angehoben werden.

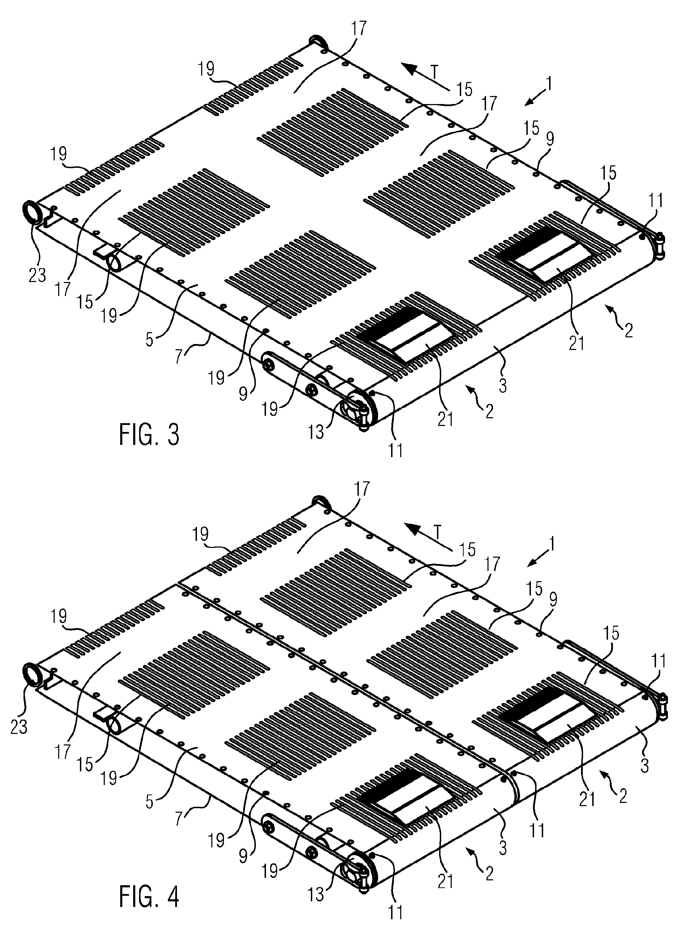

Figur 3 zeigt eine zweite Ausführungsform einer Wiegevorrichtung 1 mit einem sich über zwei Transportspuren 2 erstreckenden Förderband 3. Die ersten Teilbereiche 15 sind analog zu der ersten Ausführungsform gemäß der Figuren 1 und 2 in Transportrichtung T alternierend mit den zweiten Teilbereichen 17 angeordnet. Quer zur Transportrichtung T sind die ersten Teilbereiche 15 einer Transportspur 2 ebenfalls beabstandet zu den ersten Teilbereichen 15 der benachbarten Transportspur 2 angeordnet, so dass mittig das Förderband 3 gänzlich ohne Durchbrechungen 19 ist. Es ist jedoch auch möglich, die Durchbrechungen 19 quer zur Transportrichtung T durchgängig vorzusehen.

Figur 4 zeigt eine dritte Ausführungsform einer Wiegevorrichtung 1 mit zwei Transportspuren 2 mit jeweils einem separaten Förderband 3. Jedes der Förderbänder 3 ist auf einer separaten Antriebsrolle 13 gelagert und wird mittels in die Perforierungen 9 eingreifenden Nocken 11 der jeweiligen Antriebsrolle 13 bewegt. Für jede Transportspur 2 kann so ein eigener Antrieb vorhanden sein, um die Förderbänder 3 auch mit unterschiedlichen Geschwindigkeiten anzutreiben. Die Antriebe, beispielsweise Elektromotoren, können dazu an jeder Außenseite angeordnet sein. Ebenso ist jedoch der Einsatz einer Hohlwelle möglich, so dass zwei Elektromotoren an derselben Außenseite angeordnet sind, wobei der eine Elektromotor die erste, direkt angrenzende und innen hohle Antriebsrolle 13 antreibt und der andere Elektromotor die zweite Antriebsrolle 13 über eine durch die erste Antriebsrolle 13 verlaufende Welle antreibt. Derart könnten beispielsweise auch vier Transportspuren 2 spiegelsymmetrisch nebeneinander angeordnet sein, so dass zwei Motoren jeweils an einer Seite vorhanden sind. Ebenso ist es möglich, zwei oder mehrere Förderbänder 3 mit einem gemeinsamen Antrieb zu bewegen. Allgemein können die Ausführungsformen entsprechend der Figuren 3 und 4 jede beliebige Anzahl von nebeneinander angeordneten Transportspuren 2 aufweisen. Wird zusätzlich ein Hohlwellenantrieb verwendet, sind Vielfache von zwei Transportspuren 2 besonders sinnvoll.

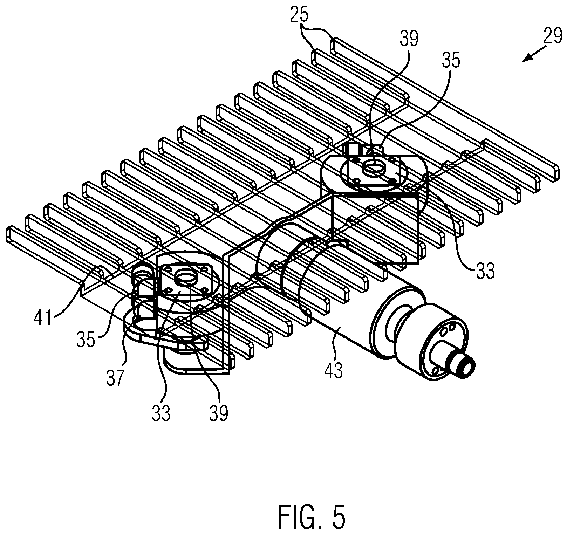

Figur 5 zeigt eine Waage 29 mit Auflageelementen 25 zum Einsatz in einer der ersten drei Ausführungsformen einer erfindungsgemäßen Wiegevorrichtung 1 gemäß der Figuren 1 bis 4, bei welcher die Auflageelemente 25 als lineare Stege ausgebildet sind. Die Auflageelemente 25 sind auf zwei Stellgliedern 33 gelagert und können so nach oben und unten bewegt werden. Die Stellglieder 33 sind insbesondere Hubzylinder und weisen einen ersten Anschluss 35 und einen zweiten Anschluss 37 auf, über welche Druckluft oder Hydraulikflüssigkeit zugeführt und abgeführt werden kann, um Träger 39, welche mit den Auflageelementen 25 verbunden sind, zu heben und zu senken. Zweckmäßig sind die Auflageelemente 25 über Guss-Stege 41 einstückig miteinander verbunden. Die Gewichtskraft der Lebensmittelportion 21 wird von einer Wägezelle 43, welche beispielsweise ein Piezoelement oder Dehnungsmessstreifen umfasst, detektiert. Üblicherweise ist im Falle mehrerer Transportspuren 2 unter jeder Transportspur 2 eine solche Waage 29 angeordnet.

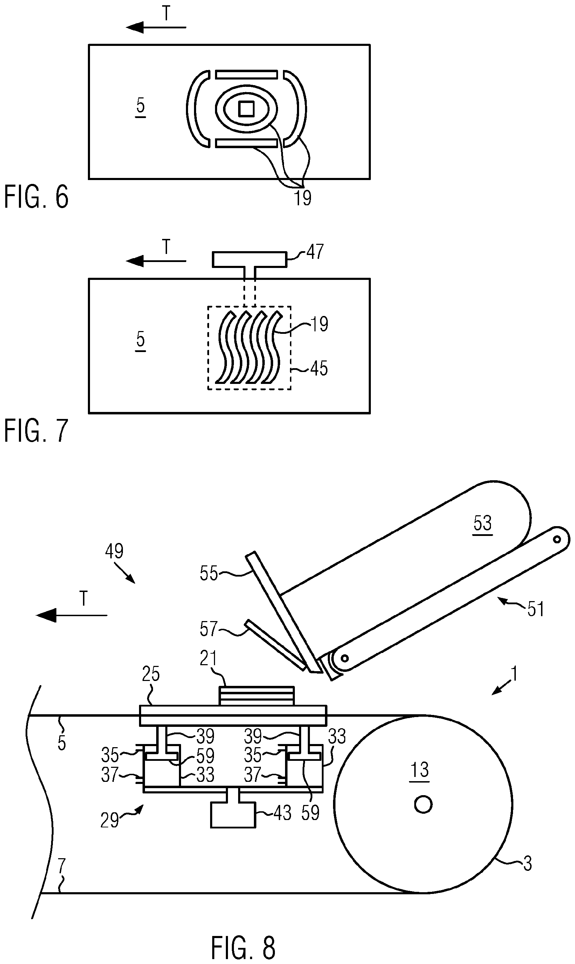

Figur 6 zeigt ein Obertrum 5 einer vierten Ausführungsform einer erfindungsgemäßen Wiegevorrichtung 1, bei welchem die Durchbrechungen 19 nicht gänzlich geradlinig oder linear ausgebildet sind. So sind einige Durchbrechungen 19 gekrümmt, kreisförmig oder oval und andere geradlinig geformt. Zudem weisen die Durchbrechungen 19 unterschiedliche Größen auf und können ihre längste Ausdehnung senkrecht zur Transportrichtung T haben. Entsprechend sind die Auflageelemente 25 geformt. Je nach Bedarf und mit Hinblick auf die zu verarbeitenden Lebensmittelportionen 21 können also unterschiedliche Formen gewählt werden, wobei die Größen von zusammenhängenden Auflageflächen den Anforderungen entsprechend gestaltet werden können.

Figur 7 zeigt eine schematische Draufsicht einer fünften Ausführungsform einer erfindungsgemäßen Wiegevorrichtung 1 mit einer weiteren Ausgestaltung von Durchbrechungen 19, welche nicht geradlinig sind. Zudem umfasst in diesem Beispiel die Waage 29 einen ersten Teil 45 welcher zwischen dem Obertrum 5 und dem Untertrum 7 angeordnet ist, und einen zweiten Teil 47, welcher seitlich neben dem Förderband 3 angeordnet ist.

Figur 8 zeigt eine seitliche schematische Schnittansicht eines Lebensmittelverarbeitungssystems 49 umfassend einer sechsten Ausführungsform einer erfindungsgemäßen Wiegevorrichtung 1. Das Lebensmittelverarbeitungssystem 49 umfasst eine Lebensmittelaufschneidevorrichtung 51 zum Aufschneiden eines Lebensmittelprodukts 53 zu Lebensmittelportionen 21 und eine Wiegevorrichtung 1 zum Wiegen der geschnittenen Lebensmittelportionen 21. In dieser Ausführungsform ist die Waage 29 unterhalb der Lebensmittelaufschneidevorrichtung 51 angeordnet, sodass die mittels eines Messers 55 von dem Produktlaib 53 geschnittenen Lebensmittelscheiben 57 direkt auf die Auflageelemente 25 herabfallen. Die Waage 29 ist zwischen dem Obertrum 5 und dem Untertrum 7 angeordnet. Mittels der Stellglieder 33 werden die Auflageelemente 25 nach oben und unten bewegt, um in der oberen Position die Lebensmittelportion 21 zu wiegen, und in der unteren Position eine Bewegung des Förderbands 3 zu ermöglichen. Zum Heben der Auflageelemente 25 wird über die zweiten Anschlüsse 37 des Stellglieds 33 Luft oder Hydraulikflüssigkeit unterhalb jeweils eines inneren Abschnitts 59 des Trägers bzw. Kolbens 39 eingepresst. Zum Absenken der Auflageelemente 25 wird über die ersten Anschlüsse 35 Luft oder Hydraulikflüssigkeit oberhalb des inneren Abschnitts 59 des Kolbens 39 eingepresst. Das Gewicht der Lebensmittelportion 21 wird mit der Wägezelle 43 gemessen.

Im Folgenden wird die Funktionsweise der Wiegevorrichtung 1 anhand der Figuren näher beschrieben.

Mittels der Lebensmittelaufschneidevorrichtung 51 werden eine oder mehrere Lebensmittelscheiben 57 von einem Lebensmittelprodukt 53 abgeschnitten und fallen auf einen ersten Teilbereich 15 eines Förderbands 3, wobei der erste Teilbereich 15 Durchbrechungen 19 aufweist. Die so aufgeschnittene Lebensmittelportion 21 wird dann in Transportrichtung T von dem Aufschneidebereich in einen Wiegebereich oberhalb der Waage 29 bewegt, wo die Auflageelemente 25 nach oben gefahren werden, die Durchbrechungen 19 durchgreifen und die Lebensmittelportion 21 anheben. Die Lebensmittelportion 21 liegt somit ausschließlich auf den Auflageelementen 25 der Waage 29 auf, und das Gewicht der Lebensmittelportion 21 wird mittels der Wägezelle 43 gemessen. Anschließend werden die Auflageelemente 25 wieder abgesenkt, so dass die Lebensmittelportion 21 wieder auf dem Förderband 3 ruht und von diesem weitertransportiert werden kann.

Alternativ zur Ausführung, bei welcher die Lebensmittelportion 21 zunächst zu der Waage 29 gefördert und über dieser positioniert wird (Figuren 1 bis 4), kann die Lebensmittelportion 21 auch direkt auf die Auflageelemente 25 aufgeschnitten werden (Figur 8). In diesem Fall entfällt die Förderbewegung des Förderbands 3 zur Positionierung der Lebensmittelportion 21 über der Waage 29. Dabei kann bereits während des Aufschneidens das Gewicht jeder einzelnen Lebensmittelscheibe 57 überprüft werden und gegebenenfalls die Scheibendicke variiert werden.

Des Weiteren kann die Waage 29 so gestaltet sein, dass die Stellglieder 33 nicht zwischen den Auflageelementen 25 und der Wägezelle 43 angeordnet sind, sondern dass die Stellglieder 33 beispielsweise an einem Rahmenteil 27 befestigt sind, und dass sowohl Auflageelemente 25 als auch Wägezelle 43 beim Durchgreifen der Durchbrechungen 19 angehoben werden.

Ausgehend von den oben dargestellten Ausführungsformen einer Wiegevorrichtung 1 sind vielerlei Variationen derselben möglich. So ist es zunächst sinnvoll, während der vertikalen Bewegung der Auflageelemente 25 sowie während des Wiegens der Lebensmittelportion 21 das Förderband 3 zu stoppen. Die Durchbrechungen 19 können jedoch auch entlang der Transportrichtung T eine derart größere Abmessung im Vergleich zu den Auflageelementen 25 aufweisen, dass eine geringfügige Bewegung des Förderbands 3 während der vertikalen Bewegung aufwärts und/oder abwärts sowie während des Wiegens möglich ist, um währenddessen eine weitere Lebensmittelportion 21 in Form eines geschindelten Stapels von Lebensmittelscheiben 57 aufzuschneiden. Je nach Aufbau des Lebensmittelverarbeitungssystems 49 kann die Wiegevorrichtung 1 unterschiedliche Abmessungen insbesondere Förderbandlängen aufweisen. Zudem kann ein Lebensmittelverarbeitungssystem 49 auch mehrere parallele Transportspuren 2 aufweisen, welche jeweils aus einer Wiegevorrichtung 1 gebildet sind. So können die Wiegevorrichtungen 1 je nach Bedarf modulartig nebeneinander angeordnet und wieder entfernt werden.

Gemäß einer weiteren Ausführungsform werden die Auflageelemente (25) beim relativen Bewegen gemäß Schritt i) angehoben.

## Patentansprüche

1. Wiegevorrichtung (1) zum Wiegen einer Lebensmittelportion (21), umfassend
eine Waage (29), und
ein Förderband (3), das sich wenigstens bereichsweise über der Waage (29) erstreckt,
wobei das Förderband (3) mit Durchbrechungen (19) versehen ist,
die Waage (29) Auflageelemente (25) umfasst, und
wobei das Förderband (3) und die Auflageelemente (25) relativ zueinander bewegbar sind, sodass die Auflageelemente (25) wenigstens einen Teil der Durchbrechungen (19) durchgreifen, **dadurch gekennzeichnet, dass**
die Waage (29) zwischen einem Obertrum (5) und einem Untertrum (7) des Förderbands (3) angeordnet ist, oder dass
ein erster Teil (45) der Waage (29) zwischen einem Obertrum (5) und einem Untertrum (7) des Förderbands (3) angeordnet ist, und ein zweiter Teil (47) der Waage (29) seitlich neben dem Förderband (3) angeordnet ist.

2. Wiegevorrichtung nach Anspruch 1, wobei die Durchbrechungen (19) nur in wenigstens einem ersten Teilbereich (15) des Förderbands (3) vorgesehen sind.

3. Wiegevorrichtung nach Anspruch 2, wobei mehrere erste Teilbereiche (15) mit Durchbrechungen (19) mit zweiten Teilbereichen (17) ohne Durchbrechungen (19) alternierend, insbesondere regelmäßig, über eine Gesamtlänge des Förderbands (3) angeordnet sind.

4. Wiegevorrichtung nach einem der vorangehenden Ansprüche, wobei die Durchbrechungen (19) eine maximale Länge (L2) haben, die nicht länger als 120% der Erstreckungslänge (L1) der Auflageelemente (25) in Förderrichtung (T) des Förderbands (3) ist.

5. Wiegevorrichtung nach einem der vorangehenden Ansprüche, wobei die Durchbrechungen (19) und die Auflageelemente (25) sich jeweils linear in Förderrichtung (T) erstrecken.

6. Wiegevorrichtung nach einem der Ansprüche 1 bis 4, wobei die Auflageelemente (25) und die Durchbrechungen (19) nichtlinear ausgeführt sind.

7. Wiegevorrichtung nach einem der vorangehenden Ansprüche, wobei die Durchbrechungen (19) sich wenigstens 50 mm und höchstens 200 mm in Förderrichtung (T) des Förderbands (3) erstrecken.

8. Wiegevorrichtung nach einem der vorangehenden Ansprüche, **gekennzeichnet durch** zwei oder mehrere parallele Transportspuren (2) mit jeweils einer Waage (29), und einem gemeinsamen oder jeweils pro Transportspur (2) separaten Förderband (3), in welchem Durchbrechungen (19) für jede Transportspur (2) ausgebildet sind.

9. Lebensmittelverarbeitungssystem (49), umfassend
eine Lebensmittelaufschneidevorrichtung (51) zum Aufschneiden eines Lebensmittelprodukts (53) zu Lebensmittelportionen (21), und
eine Wiegevorrichtung (1) gemäß einem der vorangehenden Ansprüche.

10. Verfahren zum Wiegen einer Lebensmittelportion (21), mit den folgenden Schritten:
i) Relatives Bewegen von Auflageelementen (25) einer Waage (29) bezüglich eines Förderbands (3), sodass die Auflageelemente (25) zugeordnete Durchbrechungen (19) im Förderband (3) durchgreifen, wobei die Waage (29) zwischen einem Obertrum (5) und einem Untertrum (7) des Förderbands (3) angeordnet ist, oder wobei ein erster Teil (45) der Waage (29) zwischen einem Obertrum (5) und einem Untertrum (7) des Förderbands (3) angeordnet ist, und ein zweiter Teil (47) der Waage (29) seitlich neben dem Förderband (3) angeordnet ist, und
ii) Wiegen der auf den Auflageelementen (25) aufliegenden Lebensmittelportion (21) mittels der Waage (29).

11. Verfahren nach Anspruch 10, wobei das Förderband (3) angehalten wird, bevor die Auflageelemente (25) das Förderband (3) durchgreifen.

12. Verfahren nach einem der Ansprüche 10 oder 11, wobei die Durchbrechungen (19) und Auflageelemente (25) vor Schritt i) aufeinander ausgerichtet werden.

13. Verfahren nach einem der Ansprüche 10 bis 12, wobei die Lebensmittelportion (21) nach Schritt i) direkt auf den Auflageelementen (25) abgelegt wird.

14. Verfahren zum Aufschneiden eines Lebensmittelprodukts (53), umfassend das Verfahren gemäß einem der Ansprüche 10 bis 13, wobei von dem Lebensmittelprodukt (53) abgeschnittene Lebensmittelscheiben (57) nacheinander auf den Auflageelementen (25) abgelegt werden, bis die darauf angeordnete Lebensmittelportion (21) ein vorbestimmtes Portionsgewicht erreicht hat.

## Claims

1. The A weighing device (1) for weighing a food portion (21), comprising:
a scale (29), and
a conveyor belt (3) extending at least partially above the scale (29), wherein the conveyor belt (3) is provided with apertures (19),
the scale (29) comprises support elements (25), and
wherein
the conveyor belt (3) and the support elements (25) are movable relative to each other so that the support elements (25) extend through at least a part of the apertures (19),
**characterized in that**
the scale (29) is located between an upper run (5) and a lower run (7) of the conveyor belt (3), or that
a first part (45) of the scale (29) is located between an upper run (5) and a lower run (7) of the conveyor belt (3), and a second part (47) of the scale (29) is located laterally next to the conveyor belt (3).

2. The weighing device according to claim 1, wherein the apertures (19) are provided only in at least a first subregion (15) of the conveyor belt (3).

3. The weighing device according to claim 2, wherein a plurality of first subregions (15) with apertures (19) are arranged alternating, in particular regularly, with second subregions (17) without apertures (19) over an overall length of the conveyor belt (3).

4. The weighing device according to any one of the preceding claims, wherein the apertures (19) have a maximum length (L2) which is not longer than 120% of the extension length (L1) of the support elements (25) in the conveying direction (T) of the conveyor belt (3).

5. The weighing device according to any one of the preceding claims, wherein the apertures (19) and the support elements (25) each extend linearly in the conveying direction (T).

6. The weighing device according to any one of claims 1 to 4, wherein the support elements (25) and the apertures (19) are non-linear.

7. The weighing device according to any one of the preceding claims, wherein the apertures (19) extend at least 50 mm and at most 200 mm in the conveying direction (T) of the conveyor belt (3).

8. The weighing device according to any one of the preceding claims, **characterized by** two or more parallel transport tracks (2), each with a scale (29), and a common conveyor belt (3) or a separate conveyor belt (3) for each transport track (2), in which apertures (19) are formed for each transport track (2).

9. A food processing system (49), comprising
a food slicing device (51) for slicing food products (53) to food portions (21), and
a weighing device (1) according to any one of the preceding claims.

10. A method for weighing a food portion (21), comprising the following steps:
i) relatively moving support elements (25) of a scale (29) with respect to a conveyor belt (3), so that the support elements (25) extend through associated apertures (19) in the conveyor belt (3), wherein the scale (29) is located between an upper run (5) and a lower run (7) of the conveyor belt (3), or wherein a first part (45) of the scale (29) is arranged between an upper run (5) and a lower run (7) of the conveyor belt (3), and a second part (47) of the scale (29) is arranged laterally next to the conveyor belt (3), and
ii) weighing the food portion (21) resting on the support elements (25) by means of the scale (29).

11. The method according to claim 10, wherein the conveyor belt (3) is stopped before the support elements (25) extend through the conveyor belt (3).

12. The method according to any one of claims 10 or 11, wherein the apertures (19) and the support elements (25) are aligned prior to step i).

13. The method according to any one of claims 10 to 12, wherein after step i) the food portion (21) is placed directly on the support elements (25).

14. A method for slicing a food product (53) comprising the method according to any one of claims 10 to 13, wherein food slices (57) cut from the food product (53) are successively placed on the support elements (25) until the food portion (21) disposed thereon has reached a predetermined portion weight.

## Revendications

1. Dispositif de pesage (1) pour peser une portion de denrée alimentaire (21), comprenant une balance (29), et
une bande transporteuse (3) qui s'étend au moins partiellement au-dessus de la balance (29), la bande transporteuse (3) étant munie de fenêtres (19),
la balance (29) comprend des éléments de support (25), et
dans lequel la bande transporteuse (3) et les éléments de support (25) peuvent être déplacés les uns par rapport aux autres de sorte que les éléments de support (25) viennent en prise à travers au moins une partie des fenêtres (19), **caractérisé en ce que**
la balance (29) est agencée entre un brin supérieur (5) et un brin inférieur (7) de la bande transporteuse (3), ou **en ce que**
une première partie (45) de la balance (29) est agencée entre un brin supérieur (5) et un brin inférieur (7) de la bande transporteuse (3), et une seconde partie (47) de la balance (29) est agencée latéralement à côté de la bande transporteuse (3).

2. Dispositif de pesage selon la revendication 1, dans lequel les fenêtres (19) ne sont prévues que dans au moins une première zone partielle (15) de la bande transporteuse (3).

3. Dispositif de pesage selon la revendication 2, dans lequel plusieurs premières zones partielles (15) avec des fenêtres (19) sont agencées en alternance avec des secondes zones partielles (17) sans fenêtres (19), en particulier de manière régulière, sur une longueur totale de la bande transporteuse (3).

4. Dispositif de pesage selon l'une quelconque des revendications précédentes, dans lequel les fenêtres (19) présentent une longueur maximale (L2) qui n'est pas plus longue que 120 % de la longueur d'extension (L1) des éléments de support (25) dans la direction de transport (T) de la bande transporteuse (3).

5. Dispositif de pesage selon l'une quelconque des revendications précédentes, dans lequel les fenêtres (19) et les éléments de support (25) s'étendent chacun linéairement dans la direction de transport (T).

6. Dispositif de pesage selon l'une quelconque des revendications 1 à 4, dans lequel les éléments de support (25) et les fenêtres (19) sont réalisés de manière non linéaire.

7. Dispositif de pesage selon l'une quelconque des revendications précédentes, dans lequel les fenêtres (19) s'étendent sur au moins 50 mm et au plus 200 mm dans la direction de transport (T) de la bande transporteuse (3).

8. Dispositif de pesage selon l'une quelconque des revendications précédentes, **caractérisé par** deux ou plusieurs pistes de transport parallèles (2) avec respectivement une balance (29) et une bande transporteuse (3) commune ou séparée respectivement par piste de transport (2), où des fenêtres (19) sont formées pour chaque piste de transport (2).

9. Système de traitement de denrée alimentaire (49), comprenant
un dispositif de découpe de denrée alimentaire (51) conçu pour découper un produit de denrée alimentaire (53) en portions de denrée alimentaire (21), et
un dispositif de pesage (1) selon l'une quelconque des revendications précédentes.

10. Procédé de pesage d'une portion de denrée alimentaire (21), comprenant les étapes suivantes consistant à :
i) déplacer de manière relative des éléments de support (25) d'une balance (29) par rapport à une bande transporteuse (3), de telle sorte que les éléments de support (25) viennent en prise à travers des fenêtres (19) associées dans la bande transporteuse (3), la balance (29) étant agencée entre un brin supérieur (5) et un brin inférieur (7) de la bande transporteuse (3), ou une première partie (45) de la balance (29) étant agencée entre un brin supérieur (5) et un brin inférieur (7) de la bande transporteuse (3), et une seconde partie (47) de la balance (29) étant agencée latéralement à côté de la bande transporteuse (3), et
ii) peser la portion de denrée alimentaire (21) reposant sur les éléments de support (25) au moyen de la balance (29).

11. Procédé selon la revendication 10, dans lequel la bande transporteuse (3) est arrêtée avant que les éléments de support (25) ne viennent en prise à travers la bande transporteuse (3).

12. Procédé selon l'une quelconque des revendications 10 ou 11, dans lequel les fenêtres (19) et les éléments de support (25) sont alignés les uns par rapport aux autres avant l'étape i).

13. Procédé selon l'une quelconque des revendications 10 à 12, dans lequel la portion de denrée alimentaire (21) est déposée directement sur les éléments de support (25) après l'étape i).

14. Procédé de découpe d'un produit de denrée alimentaire (53), comprenant le procédé selon l'une quelconque des revendications 10 à 13, dans lequel des tranches de denrée alimentaire (57) découpées du produit de denrée alimentaire (53) sont déposées successivement sur les éléments de support (25) jusqu'à ce que la portion de denrée alimentaire (21) disposée dessus ait atteint un poids de portion prédéterminé.
